# FASCICULE DE BREVET EUROPEEN

(11) **EP 1 209 384 B1**
(45) Date de publication et mention de la délivrance du brevet: **18.02.2004**
(21) Numéro de dépôt: 01420224.6
(22) Date de dépôt: 12.11.2001
(51) Int. Cl.: F16J 15/16, F16J 15/32

(54) **Joint d'étanchéité**
Dichtungsring
Sealing ring

(30) Priorité: 27.11.2000 FR 0015297
(43) Date de publication de la demande: 29.05.2002
(73) Titulaire: Cazier, Jean-Marc, 71290 Simandre (FR); Gyllich, Per, 3050 Humlebaek (DK)
(72) Inventeur: Cazier, Jean-Marc, 71290 Simandre (FR); Gyllich, Per, 3050 Humlebaek (DK)
(74) Mandataire: Maureau, Philippe

(56) Documents cités:
- DE-A- 19 611 673
- DE-A- 19 907 883
- GB-A- 841 997
- GB-A- 933 588
- US-A- 4 702 482

## Description

La présente invention concerne un joint d'étanchéité entre deux pièces de révolution concentriques.

De nombreux mécanismes mettent en jeu un cylindre dans lequel coulisse un piston qui sépare deux chambres. Il s'agit notamment d'actionneurs pneumatiques ou hydrauliques à déplacement linéaire ou hélicoïdal ou de vérin.

Une étanchéité radiale doit être prévue, au niveau du piston, pour empêcher le passage du fluide pneumatique ou hydraulique d'une chambre à l'autre.

Cette étanchéité revêt une importance considérable dans de nombreuses applications dans lesquelles un vérin simple ou double effet doit assurer un maintien en pression et/ou un maintien en position notamment dans le cas d'un vérin asservi.

La précision du maintien en position de la tige solidaire du piston, dépend, en effet, de la capacité du vérin à maintenir une différence de pression constante entre chacune de ses chambres.

En outre, les moyens d'étanchéité doivent présenter un faible coefficient de frottement, de façon à ne nécessiter qu'une faible différence de pression, entre les deux chambres, pour mettre en mouvement le piston.

De plus, les moyens d'étanchéité ne doivent pas induire de phénomène de broutage lors du déplacement du piston.

Pour réaliser l'étanchéité, entre la surface d'un piston et celle d'un cylindre, il est connu de réaliser une gorge annulaire dans le piston. Cette gorge est destinée à recevoir un joint.

Ce joint peut être constitué d'un élément extenseur annulaire en matériau élastomère, disposé contre le fond de la gorge ménagée dans le piston et d'un élément annulaire d'étanchéité en matériau synthétique tel que du PTFE susceptible de venir en contact contre la surface du cylindre.

Ces deux éléments sont disposés de manière concentrique, en contact l'un de l'autre.

L'élément extenseur a pour fonction de transformer la pression axiale exercée par le fluide, en une pression radiale qui plaque l'élément de frottement contre la surface à étanchéifier.

Les joints de ce type présentent globalement de bonnes propriétés d'étanchéification. Un joint de ce type est notamment représenté sur le document DE 199 07 883.

Toutefois, dans toute la gamme de pressions et principalement en basse et moyenne pression et/ou après un nombre de cycles important de mouvements du piston, on peut constater des mouvements du piston dus à l'apparition de fuites et/ou la formation d'un film de fluide entre la surface de l'élément de frottement et la surface du cylindre à étanchéifier.

Un but de l'invention est donc de proposer un joint pour pièces mécaniques concentriques animées d'un mouvement alternatif l'un par rapport à l'autre présentant une meilleure étanchéité et une durée de vie plus longue.

Le joint selon l'invention présente les caractéristiques de la revendication principale.

Ce joint réalise une étanchéité dynamique et statique.

L'étanchéité statique, c'est à dire lorsqu'il n'y a pas de mouvement relatif d'une pièce par rapport à l'autre, est réalisée principalement par les surfaces d'étanchéification.

L'étanchéité dynamique, c'est à dire lorsque les pièces sont en mouvement l'une par rapport à l'autre, est réalisée par la déformation de l'élément annulaire qui exerce une pression radiale sur l'élément annulaire d'étanchéité.

Au niveau de l'interface de contact entre la face périphérique de l'élément annulaire d'étanchéité et la surface de la pièce fixe, les arêtes d'étanchéification et les surfaces d'étanchéification créent chacun un pic de pression orthogonal à l'interface de contact. Ces pics de pression forment chacune une barrière à la formation d'un film de fluide entre la surface périphérique de la bague d'étanchéification et la surface de la pièce fixe.

De préférence, l'angle de dépouille, entre chacune des surfaces formant la gorge centrale et le plan de la face périphérique de l'élément annulaire d'étanchéité, est compris entre 1 et 5°.

Avantageusement, l'élément annulaire d'étanchéité présente deux surfaces annulaires chanfreinées qui raccordent sa surface périphérique à chacune de ses surfaces latérales.

Ces surfaces chanfreinées facilitent le montage de la pièce mobile munie du joint dans la pièce fixe.

Selon une caractéristique avantageuse chacune des faces latérales de l'élément annulaire d'étanchéité présente au moins une rainure radiale.

De préférence, chacune des faces latérales présente quatre rainures radiales disposées à 45° les unes des autres.

Préférentiellement, chacune des rainures radiales présente une paroi de fond s'étendant obliquement depuis chacune des arêtes inférieures de l'élément annulaire d'étanchéité.

De manière avantageuse, l'élément annulaire extenseur présente une section transversale trapézoïdale dont la plus petite de ses bases définit une surface venant en appui contre la surface intérieure de l'élément annulaire d'étanchéité.

La section transversale trapézoïdale permet, sous une pression axiale, un léger évasement de l'élément annulaire extenseur dans sa zone de contact avec l'élément annulaire d'étanchéité.

Pour sa bonne compréhension, l'invention est décrite ci-après en référence au dessin annexé représentant, à titre d'exemple non limitatif, une forme de réalisation préférée du joint d'étanchéité que l'invention concerne, dans lequel :
La figure 1 est une vue en perspective avec arrachement partiel de ce joint,
La figure 2 est une vue en coupe du joint monté dans un piston d'un vérin,

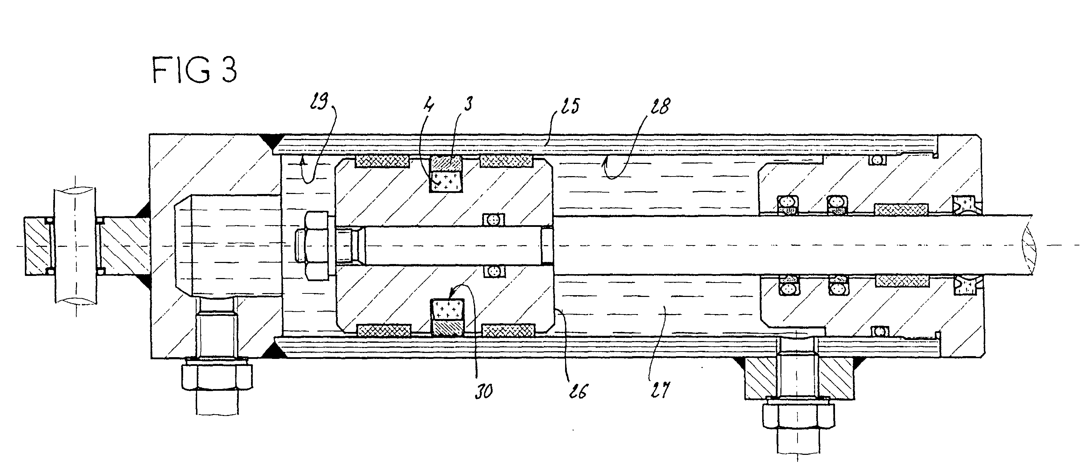

La figure 3 est une vue en coupe d'un vérin intégrant le joint.

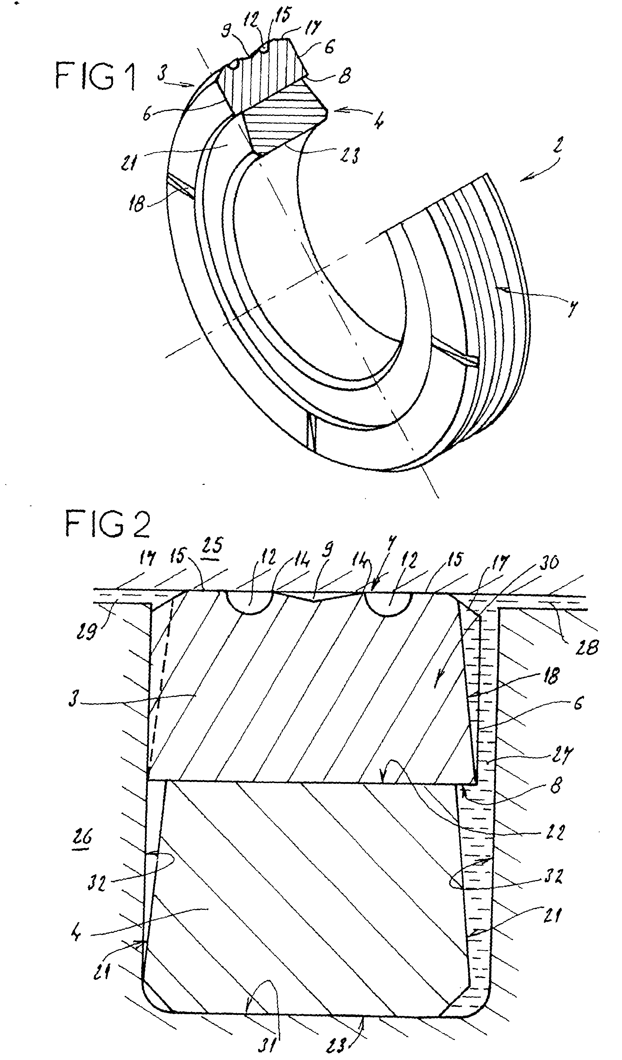

Comme le montre la figure 1, le joint 2 comprend un élément annulaire d'étanchéité 3 et un élément annulaire extenseur 4. Ces deux éléments concentriques sont en contact surfacique l'un par rapport à l'autre.

L'élément annulaire d'étanchéité est réalisé en un matériau synthétique, présentant un faible coefficient de frottement tel qu'un polytétrafluoroéthylène.

L'élément annulaire d'étancheité présente une section transversale sensiblement rectangulaire, présentant deux faces latérales planes 6, une face périphérique 7 et une face intérieure 8 plane.

La face périphérique 7 de la bague 3, présente, en son centre, une gorge centrale 9 de section transversale triangulaire, ayant un faible angle de dépouille.

De part et d'autre de la gorge centrale 9, la face périphérique 7 présente deux gorges semi-circulaires 12 symétriques de section transversale semi-circulaire.

Le raccordement de la gorge centrale 9, avec chacune des deux gorges semi-circulaires 12, est réalisé par deux arêtes d'étanchéité 14.

Deux surfaces d'étanchéité 15 s'étendent depuis chacune des gorges semi-circulaires 12 jusqu'aux extrémités latérales de la face périphérique 7.

Deux surfaces chanfreinées 17 symétriques réalisent le raccordement de la face périphérique 7 et de chacune des faces latérales 6.

Chacune des faces latérales 6 présente quatre rainures radiales 18, disposées à 90° les unes des autres, s'étendant sur la totalité de la hauteur de la élément annulaire d'étanchéité.

Chacune des rainures 18 radiales présente une paroi de fond s'étendant obliquement depuis chacune des arêtes inférieures de l'élément annulaire d'étanchéité 3.

L'élément annulaire extenseur 4 est réalisé dans un matériau élastomérique susceptible d'une certaine déformation lorsqu'il est soumis à une charge mécanique.

L'élément annulaire extenseur présente une section transversale trapézoïdale, présentant deux faces latérales convergentes 21, une face périphérique 22 et une face intérieure 23.

Le fonctionnement du joint est le suivant.

La figure 2 montre le joint réalisant l'étanchéité d'un vérin comprenant un cylindre 25 dans lequel se déplace un piston 26 délimitant deux chambres 28, 29. Chacune de ces chambres 28, 29 contient un fluide 27 susceptible de transmettre une pression.

Une gorge normalisée 30 est ménagée dans le piston 26. Cette gorge 30, délimitée par une surface de fond 31 et deux surfaces latérales 32, présente une section transversale rectangulaire de largeur légèrement supérieure à celle du joint.

Le joint 2 est monté dans la gorge 30, de telle sorte que l'élément annulaire extenseur 4 repose contre la surface de fond 31 de la gorge 30, l'élément annulaire d'étanchéité 3 étant superposé radialement à la élément annulaire extenseur 4. La face périphérique 7 de l'élément annulaire d'étanchéité est alors en contact avec la surface du cylindre 25.

L'étanchéité statique, c'est à dire lorsque le piston 26 est immobile par rapport au cylindre 25, entre les deux chambres est réalisée 28, 29 principalement par les surfaces d'étanchéification 15.

L'étanchéité dynamique, c'est à dire lorsque le piston est mis en mouvement pour une différence de pression entre les fluides présents dans chacune des chambres 28, 29 est réalisée de la manière suivante.

Comme le montre la figure 2, le fluide 27 présent dans la chambre 28 exerce une pression axiale sur la face latérale 6 de l'élément annulaire d'étanchéité et de la face latérale 21 de l'élément annulaire extenseur.

Sous l'effet de la pression, l'élément annulaire extenseur 4 se déforme, et exerce une pression radiale surfacique sur l'élément annulaire d'étanchéité 3. Cette pression s'exerce selon une distribution uniforme, du fait de la forme trapézoïdale de l'élément annulaire extenseur 4.

L'élément annulaire d'étanchéité 3 est donc plaquée contre la surface du cylindre 25 de manière sensiblement uniforme.

Au niveau de l'interface entre la face périphérique 7 de l'élément annulaire d'étanchéité et la surface du cylindre 25, les arêtes d'étanchéification 14 et les surfaces d'étanchéification 15 créent chacun un pic de pression orthogonal à l'interface de contact. Ces pics de pression forment des barrières à la formation d'un film de fluide entre la surface périphérique 7 de l'élément annulaire d'étanchéité et la surface du cylindre 25.

Lors de l'inversion du mouvement du piston, le fluide présent dans la chambre 29 exerce une pression sur le piston 26 et, donc, sur la face du joint 9 qui est en contact avec la face latérale de la gorge.

Les rainures 18 permettent une répartition plus rapide du fluide contre la paroi latérale 21 de l'élément annulaire extenseur.

Des tests ont démontré que ce joint présente une étanchéité supérieure à celle des joints connus et ce, pendant une durée de vie supérieure à celle des joints connus.

L'invention fournit ainsi un joint les nombreux avantages indiqués plus haut en termes de performances et de durée de vie.

Il va de soi que l'invention n'est pas limitée à la forme de réalisation décrite ci-dessus à titre d'exemple mais qu'elle en embrasse, au contraire, toutes les variantes de réalisation supportées par les revendications. Ainsi, le joint pourrait comprendre deux éléments annulaires extenseurs disposés côte à côte si la longueur du joint le nécessite.

## Revendications

1. Joint d'étanchéité (1 ) destiné à être installé entre deux pièces mécaniques concentriques, une première de ces pièces pouvant être animée d'un mouvement alternatif par rapport à la seconde pièce qui peut rester fixe, aménageable dans une gorge (30) annulaire ménagée dans la première pièce en mouvement, comprenant :
- au moins un élément annulaire d'étanchéité (3) dont la surface périphérique peut s'appuyer contre la surface de la seconde pièce,
- au moins un élément annulaire extenseur (4) en matériau élastique de type élastomère qui exerce une pression radiale sur l'élément annulaire d'étanchéité,
**caractérisé en ce que** :
- l'élément annulaire d'étanchéité de section sensiblement rectangulaire, présente sur sa face périphérique (7) une gorge centrale (9) de section transversale triangulaire ayant un faible angle de dépouille encadré de deux gorges (12) de profile semi-circulaire, les jonctions de ces gorges définissant deux arêtes d'étanchéification (14) et deux surfaces d'étanchéification (15) s'étendant depuis chacune des gorges semi-circulaires (12) jusqu'aux deux extrémités latérales de sa face périphérique (7), et
- l'élément annulaire extenseur (4) présente une section quadrangulaire.

2. Joint d'étanchéité selon la revendication 1, **caractérisé en ce que** l'angle de dépouille, entre chacune des surfaces formant la gorge centrale (9) et la face périphérique (7) de l'élément annulaire d'étanchéité, est compris entre 1 et 5°.

3. Joint d'étanchéité selon la revendication 1 ou la revendication 2, **caractérisé en ce que** l'élément annulaire d'étanchéité présente deux surfaces annulaires chanfreinées (17) qui raccordent sa face périphérique (7) à chacune de ses faces latérales (6).

4. Joint d'étanchéité selon l'une des revendications 1 à 3, **caractérisé en ce que** chacune des faces latérales (6) de l'élément annulaire d'étanchéité présente au moins une rainure radiale (18).

5. Joint d'étanchéité selon la revendication 4, **caractérisé en ce que** chacune des faces latérales (6) présente quatre rainures radiales (18) disposées à 45° les unes des autres.

6. Joint d'étanchéité selon la revendication 4 ou 5 **caractérisé en ce que** chacune des rainures radiales (18) présente une paroi de fond s'étendant obliquement depuis chacune des arêtes inférieures de l'élément annulaire d'étanchéité.

7. Joint d'étanchéité selon l'une des revendications 1 à 6, **caractérisé en ce que** l'élément annulaire extenseur (4) présente une section transversale trapézoïdale dont la plus petite de ses bases définit une surface venant en appui contre la surface inférieure de l'élément annulaire d'étanchéité.

## Patentansprüche

1. Dichtungsring (1) zum Einbau zwischen zwei konzentrischen mechanischen Teilen, wobei ein erstes dieser Teile bezüglich dem zweiten Teil, das feststehend bleiben kann, in eine Hin- und Herbewegung versetzt werden kann, wobei der Dichtungsring in einer Ringnut (30) untergebracht werden kann, die in dem ersten bewegten Teil eingearbeitet ist, wobei der Dichtungsring aufweist:
- mindestens ein ringförmiges Dichtungselement (3), dessen Randfläche gegen die Oberfläche des zweiten Teils gedrückt werden kann,
- mindestens ein ringförmiges Ausdehnungselement (4) aus elastischem Material vom Elastomertyp, das auf das ringförmige Dichtungselement einen radialen Druck ausübt,
**dadurch gekennzeichnet, dass**:
- das einen im wesentlichen rechteckförmigen Querschnitt aufweisende ringförmige Dichtungselement an seiner Randfläche (7) eine mittige Nut (9) mit im wesentlichen dreieckförmigem Querschnitt mit einem kleinen Einschneidungswinkel aufweist, der von zwei Nuten (12) mit halbkreisförmigem Profil umgeben ist, wobei die Verbindungen dieser Nuten zwei Abdichtungskanten (14) und zwei Abdichtungsflächen (15) bestimmen, die sich von jeder der halbkreisförmigen Nuten (12) bis zu den beiden seitlichen Enden der Randfläche (7) erstrecken, und
- das ringförmige Ausdehnungselement (4) einen viereckigen Querschnitt hat.

2. Dichtungsring nach Anspruch 1, **dadurch gekennzeichnet, dass** der Einschneidungswinkel zwischen jeder der die mittige Nut (9) bildenden Flächen und der Randfläche (7) des ringförmigen Dichtungselements zwischen 1° und 5° liegt.

3. Dichtungsring nach Anspruch 1 oder 2, **dadurch gekennzeichnet, dass** das ringförmige Dichtungselement zwei abgeschrägte Ringflächen (17) hat, welche seine Randfläche (7) mit jeder seiner Seitenflächen (6) verbinden.

4. Dichtungsring nach einem der Ansprüche 1 bis 3, **dadurch gekennzeichnet, dass** jede der Seitenflächen (6) des ringförmigen Dichtungselements mindestens eine radiale Rille (18) hat.

5. Dichtungsring nach Anspruch 4, **dadurch gekennzeichnet, dass** jede der seitlichen Flächen (6) vier radiale Rillen (18) hat, die unter 45° zueinander angeordnet sind.

6. Dichtungsring nach Anspruch 4 oder 5, **dadurch gekennzeichnet, dass** jede der radialen Rillen (18) eine Bodenwand hat, die sich von jeder der unteren Kanten des ringförmigen Dichtungselements schräg erstreckt.

7. Dichtungsring nach einem der Ansprüche 1 bis 6, **dadurch gekennzeichnet, dass** das ringförmige Ausdehnungselement (4) einen trapezförmigen Querschnitt hat, dessen kleinere Basis eine Fläche bestimmt, die an der unteren Fläche des ringförmigen Dichtungselements anliegt.

## Claims

1. Seal (1) intended for installation between two concentric mechanical parts, a first of said parts being capable of being driven with an alternating movement in relation to the second part which can remain fixed, said seal being capable of being arranged in an annular groove (30) which is provided in the first moving part, and comprising:
- at least one annular sealing element (3) whose peripheral surface can rest against the surface of the second part,
- at least one annular extensor element (4) which is made of elastic material of the elastomer type and which exerts a radial pressure on the annular sealing element,
**characterised in that**:
- the annular sealing element of substantially rectangular section has, on its peripheral face (7), a central groove (9) of triangular cross-section having a low angle of taper framed by two grooves (12) of semicircular profile, the junctions of said grooves defining two sealing edges (14) and two sealing surfaces (15) extending from each of the semicircular grooves (12) all the way to the two lateral ends of its peripheral face (7), and
- the annular extensor element (4) has a quadrangular section.

2. Seal according to claim 1, **characterised in that** the angle of taper between each of the surfaces forming the central groove (9) and the peripheral face (7) of the annular sealing element, is between 1 and 5°.

3. Seal according to claim 1 or claim 2, **characterised in that** the annular sealing element has two chamfered annular surfaces (17) which connect its peripheral face (7) to each of its lateral faces (6).

4. Seal according to one of claims 1 to 3, **characterised in that** each of the lateral faces (6) of the annular sealing element has at least one radial channel (18).

5. Seal according to claim 4, **characterised in that** each of the lateral faces (6) has four radial channels (18) disposed at 45° from one another.

6. Seal according to claim 4 or 5, **characterised in that** each of the radial channels (18) has a bottom wall extending obliquely from each of the lower edges of the annular sealing element.

7. Seal according to one of claims 1 to 6, **characterised in that** the annular extensor element (4) has a trapezoidal cross-section, the smallest of whose bases defines a surface that rests against the lower surface of the annular sealing element.
